# EUROPEAN PATENT SPECIFICATION

(11) **EP 1 631 141 B1**
(45) Date of publication and mention of the grant of the patent: **15.08.2007**
(21) Application number: 04736367.6
(22) Date of filing: 08.06.2004
(51) Int. Cl.: A01D 34/67

(54) **LAWNMOWER WITH VIBRATION REDUCTION**
RASENMÄHER MIT VERRINGERTER VIBRATION
TONDEUSE A GAZON A VIBRATIONS REDUITES

(30) Priority: 10.06.2003 SE 0301670
(43) Date of publication of application: 08.03.2006
(73) Proprietor: ÅF-Ingemansson AB, 401 24 Göteborg (SE)
(72) Inventor: LINDELL, Hans, S-423 70 Säve (SE)
(74) Representative: Kraenzmer, Martin
(86) International application number: PCT/SE2004/000888
(87) International publication number: WO 2004/107845

(56) References cited:
- EP-A1- 0 268 571
- DE-A1- 3 145 337
- US-A- 4 015 407
- US-A- 4 422 283

## Description

### Field of the Invention

The present invention relates to a wheel-mounted lawnmower or the like of the type comprising a cutting device which is connected to a motor for performing a cutting function, the lawnmower being operated by an operating means. The invention also relates to an insulator arranged on a lawnmower or the like. The invention also concerns use of a lawnmower or the like.

### Background Art

Lawnmowers and the like relate to motor-driven devices which in the first place perform a cutting operation. Examples of such lawnmowers are manual rotary lawnmowers, cylinder lawnmowers and, in some cases, chopper mowers. Not only lawnmowers but also wheel-mounted and motor-driven vertical cutters and moss cutters are concerned. Other conceivable examples are wheel-mounted aerators, peat cutters, rotary cultivators and trimmers.

The motor-driven devices of the type mentioned above, however, result in vibrations from, for instance, motor and rotating tools being transmitted to the handle and then on to the user.

This vibration problem may cause problems for the user, especially in daily and frequent use, in the form of vibration injuries in arms and hands. A common vibration injury is the white finger syndrome which means that the blood flow to the fingers is reduced, resulting in tingling and numbness.

Due to the vibrations, also components of the lawnmower may be damaged and/or come loose.

EP 0 268 571 B1 (Claesson) discloses a lawnmower with vibration damping, see Fig. 1. The lawnmower has vibration-insulating means arranged between the chassis and the attachment of the motor. The solution described results in a reduction of the vibrations from the motor to the other parts, such as a handle, of the lawnmower. However, a remaining problem is that the motor in this case is subjected to high vibration levels, which in turn may result in motor wear and a reduced motor life. Moreover, the cutting casing must on the underside be made slightly larger than usual so as not to collide with the cutting unit owing to vibration movements originating from the motor. The enlarged dimension of the cutting casing may thus cause deteriorated aerodynamic properties, which has an adverse effect on the cutting performance.

Another prior-art technique of reducing the vibration transmission to the handle is that the handle rod is separated in its longitudinal extent by an intermediate uniting spring. This solution results merely in a certain reduction of the vibration problem since only a small mass is available on the vibration insulated side of the system while at the same time the vibration insulator cannot be made particularly weak so as not to lose at the same time the handleability of the machine. Moreover this solution results in reduced handleability of the lawnmower, especially when the user, for instance, wants to slightly change the travelling direction of the lawnmower by the user pressing the handle towards the base and moving the handle sideways relative to the travelling direction, whereby the front portion of the lawnmower is moved in an opposite lateral direction relative to the preceding travelling direction. This results in considerable moment strain for this type of resilient handle.

There is currently also a directive within the EU for, inter alia, lawnmowers in professional use that stipulates that the average vibration levels should not exceed 2.5 m/s² hand-arm vibration during an 8-hour workday.

It is also desirable to provide a lawnmower with lower vibration levels which is not too expensive.

It is also preferred for the lawnmower to have good handleability.

Thus there is a need to satisfy the above requirements and to provide a solution to the above problems. Document US-4015407 discloses a wheel-mounted lawnmower.

### Summary of the Invention

Therefore the object of the present invention is to provide a lawnmower or the like which results in an improvement relative to prior art in one or more of the above aspects.

The above object is achieved by a lawnmower as stated by way of introduction, in which the lawnmower has a first unit which is provided with said cutting device and said motor. A second unit has at least two rotatable wheels for moving the lawnmower relative to a base, a wheel frame for arranging the wheels and for arranging said operating means on said wheel frame. An insulator is arranged to at least partly mutually connect said first and second unit to reduce any vibrations between said units.

This construction makes it possible to reduce the vibrations from the motor as well as from the cutting device, so that the operating means will have a reduced vibration level. Furthermore, the vibration levels of the motor will be reduced by the mass of the other parts of the first unit counteracting the movements of the motor. This also allows the distance between the cutting device and the first unit to be kept constant.

The above object is also achieved by an insulator arranged on a lawnmower or the like as described above.

Preferably said insulator is adapted to reduce any vibrations in said first unit to be transmitted to said second unit which is connected to said operating means.

Said first unit comprises preferably a frame for attaching said cutting device and said motor. Further said first unit suitably has a protective cover which at least partially surrounds said cutting device. The protective cover performs a protecting function and is also suitably adapted to produce convenient currents of air when the lawnmower is in operation, thus facilitating the cutting function. Moreover, a body is suitably included in said first unit. The above-mentioned components increase the total mass of the first unit, which thus counteracts the movements and vibrations of the motor.

Said operating means is alternatively in its longitudinal direction divided into at least two pieces which are connected at least partially by a damping element to reduce any vibrations from said second unit to the handle portion of the operating means. In this manner, the remaining vibrations to the user may be reduced.

The operating means advantageously constitutes part of said wheel frame. Moreover the operating means is suitably L-shaped with a first end having an operating handle and a second end to be connected to the wheels of the lawnmower.

Alternatively the operating means is at least one operating rod which is connected to said wheel frame.

Additional features and advantages of the present invention will be evident from the following description of special embodiments of the invention with reference to the accompanying drawings.

### Brief Description of the Drawings

Fig. 1 illustrates a lawnmower according to prior art.
Fig. 2 illustrates schematically a lawnmower according to a first embodiment of the invention.
Fig. 3a shows a first unit of the lawnmower according to Fig. 2.
Fig. 3b shows a second unit of the lawnmower according to Fig. 2.
Fig. 4 illustrates schematically a lawnmower with a an operating means according to a second embodiment of the invention.
Fig. 5a illustrates schematically a lawnmower according to a third embodiment of the invention.
Fig. 5b shows the lawnmower according to Fig. 5a in an assembled state.
Fig. 6 is an enlarged section seen from the front according Fig. 5a.
Fig. 7a illustrates schematically a lawnmower according to a fourth embodiment of the invention.
Fig. 7b is an enlarged section seen from the front according to Fig. 7a.
Fig. 8a illustrates an insulator according to Fig. 7b.
Fig. 8b shows an alternative insulator according to Fig. 7b.

### Description of Preferred Embodiments

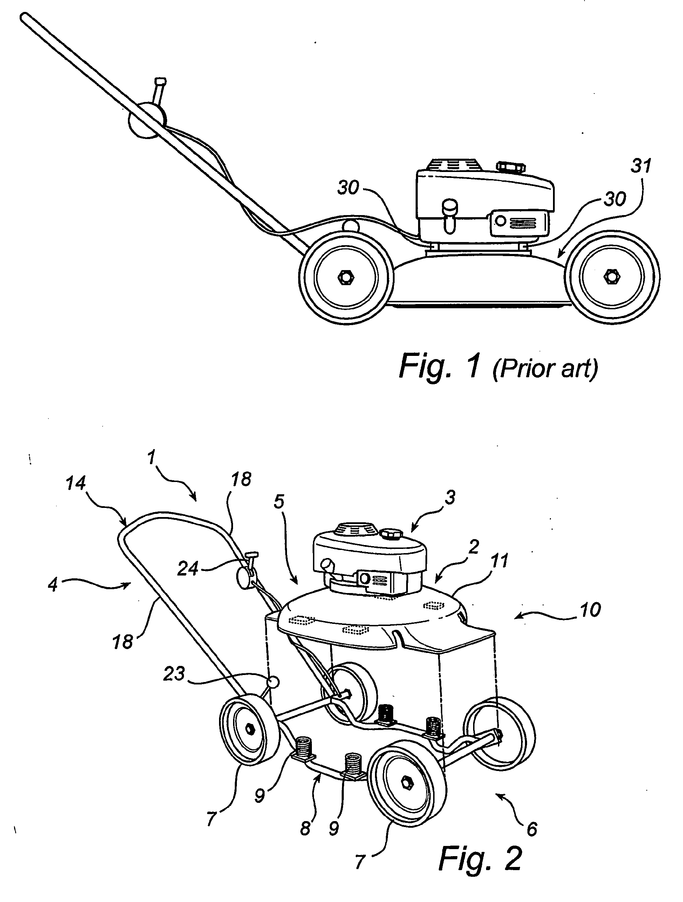

Fig. 1 illustrates a lawnmower according to prior art. The prior-art lawnmower is provided with rubber blocks 30 which are fixed between a motor and a chassis 31. Fig. 1 illustrates an example where there is a risk of the motor being subjected to high vibration levels, as described above.

Fig. 2 shows a non-self-propelled rotary lawnmower 1 according to a first embodiment of the invention of the type where the user steers and walks preferably behind the lawnmower (relative to the main direction of movement). The lawnmower 1 comprises a cutting device 2 which is driven by a motor 3 connected thereto. The cutting device 2 and the motor 3 are according to the first embodiment mounted on a frame 10 for attachment, and the frame 10 also constitutes a hood-shaped protective cover 11 for the cutting device 2. The lawnmower is operated by an operating means 4 which is connected to the lawnmower 1. The operating means 4, which in the first embodiment is U-shaped seen from above and L-shaped seen from the side, consists of two operating rods 18 (directed to the far end in the Figure) with a connecting handle portion 14 at a first end 15 of the operating means 4. The lawnmower 1 is also provided with four rotatable wheels 7 to be able to move the lawnmower relative to a base.

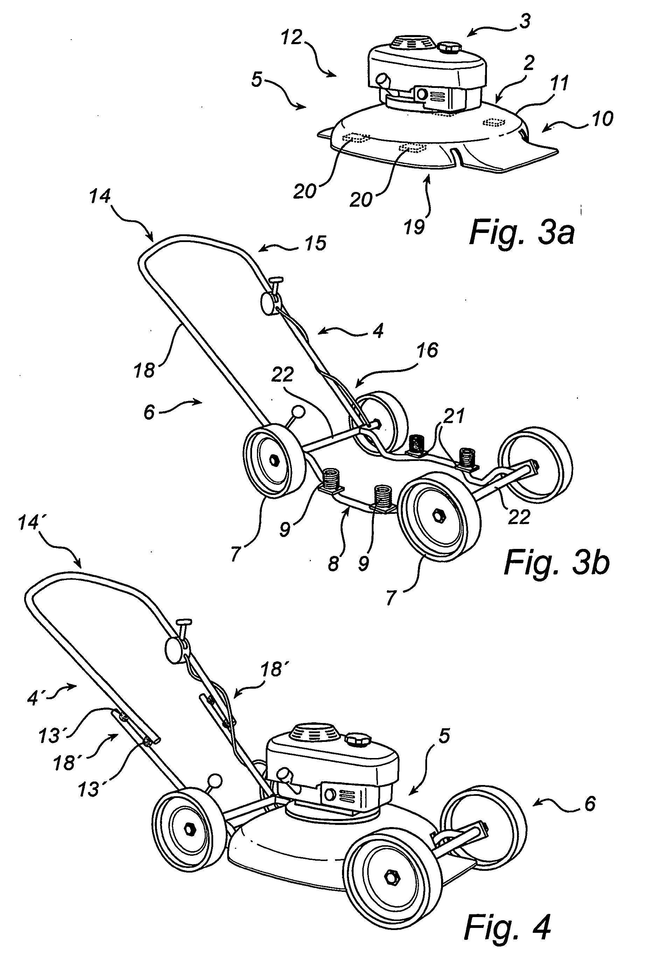

Fig. 3a shows a first unit 5 of the lawnmower 1 according to the first embodiment. The first unit comprises in this case suitably the hood-shaped frame 10 for stable attachment of the motor 3 and the cutting device 2. The hood-shaped frame 10 with its protective cover 10 surrounds, peripherally and above, a rotatable blade 19 of the cutting device 2. The protective cover 11 has an opening for the blade (directed towards the base of the lawnmower) to perform the cutting function of the lawnmower. The hood-shaped frame 10 is preferably cast in one piece which is made of metal such as steel or aluminium or alternatively pressed metal sheet or a rigid plastic material. As is evident from Fig. 3a, the rectangular frame 10 has in each corner portion a first fixing portion 20 for an insulator 9. The upper portions of the first unit can be seen as a body 12, which may of course comprise a plurality of adjusted protective hoods for, for instance, the motor 3.

Fig. 3b shows a second unit 6 of the lawnmower according to the first embodiment. The second unit 6 comprises a rectangular wheel frame 8 supporting the four wheels 7. It is evident from Fig. 3b that the front and rear wheels 7 are arranged on a wheel axle 22 each. The operating means 4 is at its second end 16 attached to the wheel frame 8 at the two rear wheels (seen at the far end in the Figure) of the lawnmower. The wheel frame 8 in Fig. 3 has four further fixing portions 21 for the insulator 9 located at the lateral portions of the wheel frame 8.

With reference once more to Figs 3a and 3b, the insulators 9 are in the first embodiment pressure springs which are positioned between the first 20 and the second 21 fixing portions. Furthermore the insulator 9 preferably is made of a rigid material which is suited for springs, such as steel.

Of course, the insulator 9 may consist of other vibration-damping elements in terms of shapes as well as material which is adapted to reduce vibrations, for instance a piece of foamed polymer, such as polyurethane. Further examples are rubber and other suitable elastomers.

The function of the lawnmower will now be described. With reference once more to Figs 2, 3a and 3b, when the spring 9 is mounted in the intended place, the spring will be slightly compressed as a result of the mass of the first unit 5. When the motor 3 and the cutting device 2 are in operation, the vibrations will be propagated within the first unit 5 which also comprises the hood-shaped frame 10.

The vibrations of the motor will thus be distributed within the first unit 5. In this way, the total mass of the first unit 5 counteracts the vibrations of the motor 3 and the cutting device 2. The first unit 5 has preferably only contact with second unit 6 by means of the insulators 9. The vibrations from the first unit 5 can thus essentially be transmitted merely via the insulators 9.

In this way the vibrations from the first unit 5 to the second unit 6 are reduced, and the user of the lawnmower avoids high vibration levels through the handle portion 14.

Any remaining vibrations will be distributed within the second unit 6 which comprises the wheel frame 8, the wheels 7 and the operating means 4. However, it should be noted that the wheels in normal use of the lawnmower have contact with a supporting and usually damping base.

The main vibrations which should be reduced originate mainly from the imbalance and accelerating forces of the motor and also from any imbalance in the cutting unit. The vibrations occur essentially in the radial direction, but since the centre of gravity of the lawnmower does not coincide with the plane in which the forces occur, also axial vibrations occur.

In the same way as described above, any vibrations from the second unit 6 to the first unit 5 can be damped.

With reference once more to Fig. 2, the lawnmower is provided with a control handle 23 for adjusting the height of the cutting device relative to its base (the lawn). However, it should be noted that the distance in the vertical direction between the cutting blade and the first unit 5 is constant. Fig. 3 also shows a regulator 24 for adjusting, for instance, the speed of the motor 3 of the lawnmower.

Fig. 4 shows a lawnmower with an operating means 4', according to a second embodiment of the invention. In the second embodiment, the operating means 4' has two operating rods 18' which are each divided into two elongate pieces. Each divided operating rod 18' is connected by a damping element 13' which in this embodiment is a coil spring, but which may of course consist of other suitable vibration damping means. This damping element 13' can thus reduce any remaining vibrations from the second unit 6 to reach the handle portion 14' and, thus, also the user.

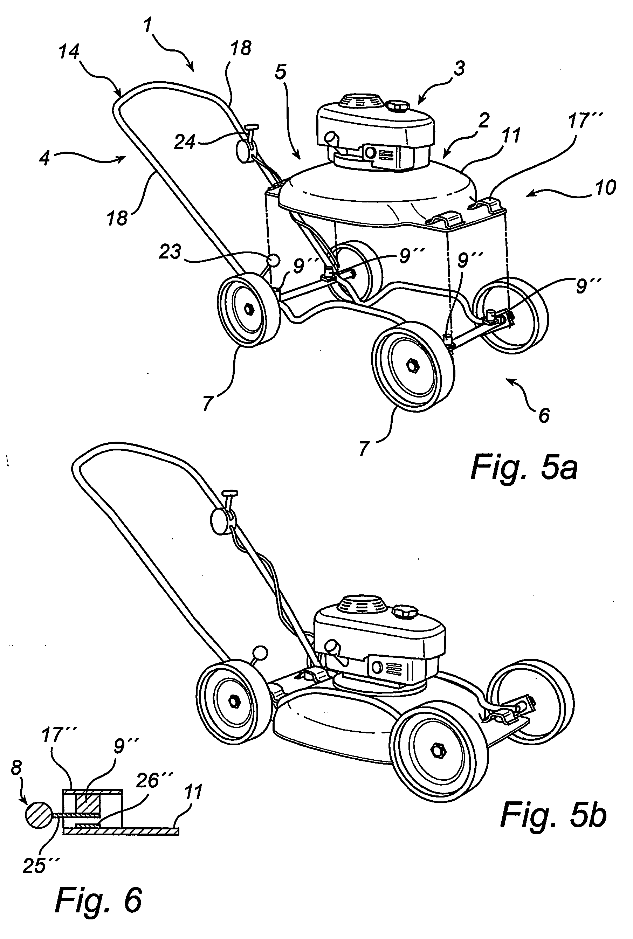

Fig. 5a shows a lawnmower according to a third embodiment of the invention. The lawnmower is provided with insulators 9" which are fixed to the protective cover 11 in a clamp 17" and in the wheel frame 8 at each wheel 7. The insulators 9" are preferably arranged so as to be longitudinally compressed owing to the weight of the first unit 5, but may of course be arranged so as to be subjected to tractive forces instead. It goes without saying that the insulators 9" can be arranged in some other way so as to be subjected to a combination of tractive and compressive forces and/or shear forces.

The insulators 9" according to the third embodiment are made, for instance, of foamed polyurethane or other suitable materials that exhibit properties according to the intentions of the invention.

Any stress that exceeds normal use is suitably relieved by limit stops (not shown) to prevent the insulators from being subjected to excessive stress levels which may cause a reduction of the life of the insulators.

Fig. 5b, which shows the invention according to the third embodiment in an assembled state, has the parts of the wheel frame 8 parallel to the travelling direction arranged on the upper side of the protective cover 11.

Fig. 6, which is an enlarged section seen from the front of the invention according to the third embodiment, is provided with said clamp 17". The insulator 9" is at its upper end fixed to the clamp 17" and at its lower end to a connecting plate 25" of the wheel frame 8. The protective cover 11 and/or the connecting plate 25" are provided with a damping means 26" for preventing the connecting plate 25" and the protective cover 11 from coming into direct contact with each other, thus reducing any vibrations.

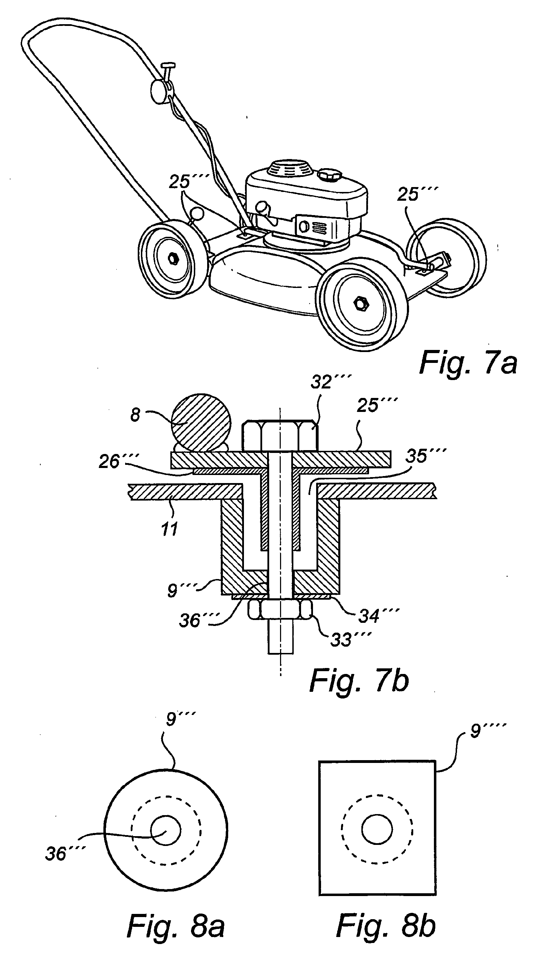

With reference to Fig. 7a, a fourth embodiment of the present invention will be described. The definitions, components, functions and variations of the previously described embodiments, which are not directly mentioned below in connection with the fourth embodiment, are similar to the other embodiments, and therefore the description thereof will be omitted with reference to the above description.

Fig. 7a illustrates an alternative of the previous third embodiment, in which a respective insulator 9"' is arranged under the protective cover 11 adjacent to a respective connecting plate 25"'.

Fig. 7b illustrates the connecting plate 25"', which is fixed to the wheel frame 8, for instance by a welded joint. The connecting plate 25"' has a through hole for holding a fixing means 32"', for instance a screw means. The fixing means 32"' is attached to the connecting plate 25"', for example by a welded joint. As shown in Fig. 7b, the connecting plate 25"' has a sleeve-like damping means 26"' which is mounted on the underside of the connecting plate 25'''.

Fig. 7b also shows a portion of the protective cover 11, which portion may consist of another suitable part of the first unit 5. The protective cover 11 has a recess 35"' which is adapted to be diametrically slightly larger than the fixing means 32"', for instance as illustrated in Fig. 7b. An insulator 9"' is mounted on the underside of the protective cover 11. The insulator 9"' is preferably sleeve-shaped with an inner cylindrical cavity and a through hole 36"' which is adjusted to the fixing means 32"'. Fig. 8a shows an insulator 9"' with a cylindrical peripheral shape. Fig. 8b shows another example of an insulator 9"" which has a square peripheral shape. Of course, the insulator 9"'; 9"" can be designed in many different ways and still perform a similar damping function according to the intentions of the invention. According to the fourth embodiment in Fig. 7b, a washer 34"' and a nut 33"' are arranged on the threaded fixing means 32"' at the through hole 36"' of the insulator.

With reference once more to Fig. 7b, the fixing means 32 "' will thus in the mounted state of use be subjected to essentially axial tractive forces caused by forces of gravity and any other forces from the unit 5 acting downwards. The wheel frame 8 thus supports these forces by means of the insulator 9"'; 9"", and any vibrations may be effectively reduced as described above. Thus, the insulator 9"', 9"" is slightly compressed in the normal mounted state. Furthermore, an air gap each is shown between the damping means 26"' and the protective cover 11 and also between the damping means 26"' and the recess 35"'. In case of stress in addition to normal stress, this is absorbed by the damping means 26"' which acts as a limit stop. Moreover, the fourth embodiment gives an advantage since the fixing means 32"' can easily be adjusted. It will be appreciated that the above-described embodiments of the invention can be modified, combined and varied by a person skilled in the art without departing from the inventive idea as defined in the claims. For instance, the above-described lawnmower can with relatively simple means be adjusted to be arranged with at least two driven wheels 7 of the lawnmower. The lawnmower can also be adjusted to be without wheels, referred to as hoover mower, where in this case the second unit 6 without wheels can be arranged with the fastening of insulators to the first unit, so that the desired corresponding vibration-damping effect is achieved.

The lawnmower and the like may, of course, comprise several working units, such as two rotatable cutting units.

The operating means 4 and the wheel frame 8 may, of course, also consist of a single stable unit, which, for instance, is welded together.

Furthermore, the lawnmower 1 can be adjusted to insulators 9 which, among other things, are subjected to forces in a pulling direction, the second fixing portion 21 being positioned above the first fixing portion 20. In this case; the insulators 9 may be, for example, tension springs which are extended due to the mass of the first unit 5 and which may thus give a corresponding vibration-damping effect. The insulators 9 can also be fixed to the wheel frame 8 at the wheels 7 or, alternatively, to the axles 22 of the wheels.

Moreover the insulators 9 can be fixed to the first fixing portions 20 and the second fixing portions 21, respectively, by welded joints, glue or rivet joints or alternatively screw joints, splines, key joints, mechanical joints, press and shrink fits.

## Claims

1. A wheel-mounted lawnmower (1) or the like of the type comprising a cutting device (2) which is connected to a motor (3) for performing a cutting function, the lawnmower (1) being operated by an operating means (4),
**characterised in that**
the lawnmower (1) has a first unit (5) which is provided with said cutting device (2) and said motor (3), a second unit (6) which has at least two rotatable wheels (7) for moving the lawnmower relative to a base, a wheel frame (8) for arranging the wheels and for arranging said operating means (4) on said wheel frame (8), and an insulator (9) which is arranged to at least partially mutually connect said first (5) and second (6) unit to reduce any vibrations between said units (5, 6).

2. A lawnmower (1) as claimed in claim 1, in which said insulator (9) is adapted to reduce any vibrations of said first unit (5) to be transmitted to said second unit (6) which is connected to said operating means (4).

3. A lawnmower (1) as claimed in claim 1 or 2, in which said first unit (5) comprises a frame (10) for attaching said cutting device (2) and said motor (3).

4. A lawnmower (1) as claimed in any one of the preceding claims, in which said first unit (5) has a protective cover (11) which at least partially surrounds said cutting device (2).

5. A lawnmower (1) as claimed in any one of the preceding claims, in which a body (12) is included in said first unit (5).

6. A lawnmower (1) as claimed in any one of the preceding claims, in which said operating means (4') in its longitudinal direction is divided into at least two pieces which are connected at least partially by a damping element (13') to reduce any vibrations from said second unit (6) to the handle portion (14') of the operating means.

7. A lawnmower (1) as claimed in any one of the preceding claims, in which said operating means (4) constitutes part of said wheel frame (8).

8. A lawnmower (1) as claimed in any one of the preceding claims, in which said operating means (4) is L-shaped with a first end (15) having the handle portion (14) and a second end (16) to be connected to the wheels (7) of the lawnmower.

9. A lawnmower (1) as claimed in any one of the preceding claims, in which said operating means (4) is at least one operating rod (18) which is connected to said wheel frame (8).

10. Use of a lawnmower or the like as claimed in any one of claims 1-9.

## Patentansprüche

1. Radmontierter Rasenmäher (1) oder dergleichen in der Bauart, umfassend eine Schneidevorrichtung (2), welche mit einem Motor (3) zum Durchführen einer Schneidefunktion verbunden ist, wobei der Rasenmäher (1) mittels eines Betriebsmittel (4) betrieben wird,
**dadurch gekennzeichnet , dass**
der Rasenmäher (1) eine erste Einheit (5), welche mit der Schneidevorrichtung (2) und dem Motor (3) versehen ist, eine zweite Einheit (6), welche zumindest zwei drehbare Räder (7) zum Bewegen des Rasenmähers bezüglich eines Bodens, ein Radgestell (8) zum Anordnen der Räder und zum Anordnen des Betriebsmittels (4) auf dem Radgestell (8), und ein Isolator (9), welcher angeordnet ist, um zumindest teilweise gegenseitig die erste (5) und zweite Einheit (6) zu verbinden, um jegliche Vibrationen zwischen den Einheiten (5, 6) zu reduzieren, besitzt.

2. Rasenmäher (1) gemäß Anspruch 1, in welchem der Isolator (9) angepasst ist, um jegliche Vibrationen der ersten Einheit (5) zu reduzieren, die zu der zweiten Einheit (6) übertragen werden, welche mit dem Betriebsmittel (4) verbunden ist.

3. Rasenmäher (1) gemäß Anspruch 1 oder 2, in welchen die erste Einheit (5) ein Gestell (10) zum Anfügen der Schneidevorrichtung (2) und des Motors (3) umfasst.

4. Rasenmäher (1) gemäß einem der vorhergehenden Ansprüche, in welchen die erste Einheit (5) einen Schutzabdeckung (11) besitzt, welche zumindest teilweise die Schneidevorrichtung (2) umgibt.

5. Rasenmäher (1) gemäß einem der vorhergehenden Ansprüche, in welchen ein Gehäuse (12) in der ersten Einheit (5) eingeschlossen ist.

6. Rasenmäher (1) gemäß einem der vorhergehenden Ansprüche, in welchen das Betriebsmittel (4') in seiner Längsrichtung in mindestens zwei Stücke geteilt ist, welche zumindest teilweise durch ein Dämpfungselement (13') verbunden sind, um jegliche Vibrationen von der zweiten Einheit (6) zu dem Griffabschnitt (14') des Betriebsmittels zu reduzieren.

7. Rasenmäher (1) gemäß einem der vorhergehenden Ansprüche, in welchen das Betriebsmittel (4) Teil des Radgestells (8) bildet.

8. Rasenmäher (1) gemäß einem der vorhergehenden Ansprüche, in welchen das Betriebsmittel (4) mit einem ersten Ende (15) L-geformt ist, das den Griffabschnitt (14) und ein zweites Ende (16) besitzt, um mit den Rädern (7) des Rasenmähers verbunden zu werden.

9. Rasenmäher (1) gemäß einem der vorhergehenden Ansprüche, in welchen das Betriebsmittel (4) eine Betriebsstange (18) ist, welche mit dem Radgestell (8) verbunden ist.

10. Anwendung eines Rasenmähers oder dergleichen gemäß einem der Ansprüche 1-9.

## Revendications

1. Tondeuse à gazon montée sur roues (1) ou autre similaire du type comprenant un dispositif de coupe (2) qui est connecté à un moteur (3) pour effectuer une fonction de coupe, la tondeuse à gazon (1) étant faite fonctionnée par un moyen d'exploitation (4),
**caractérisée en ce que**
la tondeuse à gazon (1) a une première unité (5) qui est pourvue dudit dispositif de coupe (2) et dudit moteur (3), une deuxième unité (6) qui a au moins deux roues rotatives (7) pour déplacer la tondeuse à gazon par rapport à une base, un cadre pour roues (8) pour agencer les roues et pour agencer ledit moyen d'exploitation (4) sur ledit cadre pour roues (8), et un isolateur (9) qui est agencé pour relier au moins partiellement de façon mutuelle lesdites première (5) et deuxième (6) unités pour réduire toutes vibrations entre lesdites unités (5, 6).

2. Tondeuse à gazon (1) comme revendiqué dans la revendication 1, dans laquelle ledit isolateur (9) est adapté pour réduire toutes vibrations de ladite première unité (5) devant être transmises à ladite deuxième unité (6) qui est reliée audit moyen d'exploitation (4).

3. Tondeuse à gazon (1) comme revendiqué dans la revendication 1 ou 2, dans laquelle ladite première unité (5) comprend un cadre (10) pour fixer ledit dispositif de coupe (2) et ledit moteur (3).

4. Tondeuse à gazon (1) comme revendiqué dans l'une quelconque des revendications précédentes, dans laquelle ladite première unité (5) a un couvercle de protection (11) qui entoure au moins partiellement ledit dispositif de coupe (2).

5. Tondeuse à gazon (1) comme revendiqué dans l'une quelconque des revendications précédentes, dans laquelle un corps (12) est inclus dans ladite première unité (5).

6. Tondeuse à gazon (1) comme revendiqué dans l'une quelconque des revendications précédentes, dans laquelle le moyen d'exploitation (4') dans sa direction longitudinale est divisé en au moins deux parties qui sont reliées au moins partiellement par un élément d'amortissement (13') pour réduire toutes vibrations depuis ladite deuxième unité (6) à la portion de guidon (14') du moyen d'exploitation.

7. Tondeuse à gazon (1) comme revendiqué dans l'une quelconque des revendications précédentes, dans laquelle ledit moyen d'exploitation (4) constitue une partie dudit cadre pour roues (8).

8. Tondeuse à gazon (1) comme revendiqué dans l'une quelconque des revendications précédentes, dans laquelle ledit moyen d'exploitation (4) est en forme de L avec une première extrémité (15) ayant la portion de guidon (14) et une deuxième extrémité (16) devant être reliée aux roues (7) de la tondeuse à gazon.

9. Tondeuse à gazon (1) comme revendiqué dans l'une quelconque des revendications précédentes, dans laquelle ledit moyen d'exploitation (4) est au moins une tige d'exploitation (18) qui est reliée audit cadre pour roues (8).

10. Utilisation d'une tondeuse à gazon ou autre similaire comme revendiqué dans l'une quelconque des revendications 1-9.
